# EUROPEAN PATENT APPLICATION

(11) **EP 2 711 849 A2**
(43) Date of publication of application: **26.03.2014**
(21) Application number: 13181449.3
(22) Date of filing: 23.08.2013
(51) Int. Cl.: G06F 17/27

(54) **Learning opinion-related patterns for contextual and domain-dependent opinion detection**

(30) Priority: 31.08.2012 US 201213600329
(71) Applicant: Xerox Corporation, Rochester, New York 14644 (US)
(72) Inventor: Brun, Caroline, 38000 Grenoble (FR)
(74) Representative: Skone James, Robert Edmund

(57) **Abstract**

A method for extracting opinion-related patterns includes receiving (S102) a corpus of reviews, the reviews each including an explicit rating of a topic. The reviews are partitioned among a predefined plurality of classes, based on the ranking. Syntactic relations are identified in each review (S108). The syntactic relations may each include an adjective and a noun. A set of patterns is generated (S112), each of the patterns having at least one of the identified syntactic relations as an instance and the patterns clustered (S116) into a set of clusters based on a set of features. At least one of the features is based on occurrences, in the predefined classes, of the instances of the patterns. A polarity is assigned to ones of the clusters and propagated to patterns in the respective clusters. The polarity-labeled patterns can each be instantiated as a contextual rule for opinion mining.

## Description

The exemplary embodiment relates to the field of language processing and finds particular application in connection with resolving ambiguity in candidate polar expressions for creation of a polar vocabulary.

Opinion mining refers to the determination of the attitude a speaker or a writer with respect to some topic, and is applicable to a wide range of applications involving natural language processing, computational linguistics, and text mining. Opinion mining is of particular interest to businesses seeking to obtain the opinions of customers and other reviewers on their products and services. Opinions are often expressed on social networks, blogs, e-forums, and in dedicated customer feedback pages of company websites. The detected opinions may enable items to be recommended to a user based on their reviews of other items, to provide manufacturers with an automated method for obtaining reviewers' opinions of an item, and to check consistency within a review between the free text portion of a review and the rating given to an item.

Opinion detection systems often make use of a polar lexicon of terms known to have positive or negative connotations. While some opinion-related terms keep their polarity in any context and/or across any domain, other terms have an ambiguous polarity and are highly dependent on the context or the domain. In this case, the opinion is generally carried by complex expressions rather than single terms. For example, an adjective like *hideous* in English (and similarly *hideux* in French) can be considered to have a negative polarity in virtually any context and any domain. Similarly, an adjective like *wonderful* (or *merveilleux* in French) can be considered to have a positive polarity in any context and any domain. However, other adjectives can have different polarities.

For example, the adjective *frais* (fresh) in French has different polarities depending on context and domain, as shown by the following examples: In the context *avoir le teint frais* (to have a healthy glow), and in the context *un poisson bien frais* (a fresh fish), *frais* has a positive connotation while in the context *un accueil plutot frais* (a rather cool reception), *frais* has a negative connotation. Similarly, the adjective *rapide* (rapid) in French has different polarities depending on context and domain. For example, in the context *l'impression est rapide* (the printing is fast), *rapide* has a positive connotation, while in the context *un résumé rapide* (a short summary), *rapide* is fairly neutral in connotation.

Similarly in English, the adjective *cool* has different polarities, as in *a cool reception* (negative), *cool climate* (neutral), or *cool* as a *cucumber* (positive).

Accordingly, when generating a lexicon of polar adjectives, such words present problems as they cannot be uniquely categorized as positive or negative. As a result, opinion detection systems which make use of a polar lexicon tend to miss many opinion-related expressions.

In accordance with one aspect of the exemplary embodiment, a method for extracting opinion-related patterns includes receiving a corpus of reviews, each of the reviews in the corpus including an explicit rating of a topic. At least a portion of the reviews is partitioned among a predefined plurality of classes, based on the explicit ranking. Syntactic relations are identified in a text portion of each of the reviews in the portion of the reviews. Each of the identified syntactic relations includes a first term comprising an adjective and a second term comprising a noun, the adjective serving as a modifier or attribute of the respective noun. The method further includes generating a set of patterns, each of the patterns having at least one of the identified syntactic relations as an instance and clustering the patterns into a set of clusters based on a set of features. At least one of the features in the set of features is based on occurrences, in the predefined classes, of the instances of the patterns. A subset of the clusters is selected and a polarity assigned to patterns in the respective clusters in the subset. One or more of the steps of the method may be performed with a computer processor.

In accordance with another aspect of the exemplary embodiment, a system for generating contextual rules for opinion detection includes a review classifier configured for partitioning reviews among a predefined plurality of classes, based on an explicit ranking of a topic associated with each of the reviews. A parser is configured for identifying syntactic relations in a text portion of each of the reviews in the portion of the reviews, each of the identified syntactic relations including a first term comprising an adjective and a second term comprising a noun, the adjective serving as a modifier or attribute of the respective noun. A pattern extractor is configured for generating a set of patterns, each of the generated patterns having at least one of the identified syntactic relations as an instance. A clustering component is configured for clustering the patterns into a set of clusters based on a set of features, at least one of the features in the set of features being based on occurrences, in the predefined classes, of the instances of the patterns. A contextual rule generator is configured for generating contextual rules for the patterns in a plurality of the clusters to which a polarity has been assigned. A processor is provided for implementing the review classifier, parser, pattern extractor, clustering component, and contextual rule generator.

In accordance with another aspect of the exemplary embodiment, a method for generating contextual rules includes receiving a corpus of documents, each of the documents in the corpus being associated with an explicit rating of a topic, partitioning at least a portion of the documents among a predefined plurality of classes, based on the explicit ranking, and identifying opinion instances in the documents, each of the opinion instances comprising an instance of a term in an associated polar vocabulary. The method further includes identifying syntactic relations in the documents, each of the identified syntactic relations including a first term comprising an adjective that is not an instance of a term in the polar vocabulary and a second term comprising a noun, the adjective serving as a modifier or attribute of the respective noun, generating a set of patterns, each of the patterns having at least one of the identified syntactic relations as an instance, and extracting features for each of the patterns, the extracted features including features based on occurrences, in the predefined classes, of the instances of the patterns. The patterns are clustered into a set of clusters based on the extracted features and contextual rules are generated for those of the patterns which are in a plurality of the clusters to which a polarity has been assigned. One or more of the steps of the method may be performed with a computer processor.

FIGURE 1 is a functional block diagram of a system for generating opinion mining patterns;

FIGURE 2 is a flow chart illustrating a method for generating opinion mining patterns;

FIGURE 3 is a functional block diagram of a system for using opinion mining patterns generated in the method of FIGURE 2;

FIGURE 4 illustrates a user review of an item;

FIGURE 5 illustrates part of an XML file based on the user review of an item shown in FIGURE 4; and

FIGURE 6 is a flow chart illustrating a method for using the opinion mining patterns generated in the method of FIGURE 3.

Aspects of the exemplary embodiment relate to a system and method for extracting opinion-related patterns for use in an opinion mining system and to an opinion mining system and method which utilize the generated patterns. The opinion-related patterns find use in detecting an author's attitude with respect to a topic in text written in a natural language having a vocabulary and a grammar, such as English or French. The opinion mining system may find application in detecting opinions in a domain specific or domain independent corpus. Examples of such corpora include social networks, blogs, e-forums, that are a source of topics and opinions. It finds particular application in business analytics, where it facilitates the detection of customers' opinions on a company's products.

When building an opinion detection system, it is desirable to be able to disambiguate these polar expressions and associate to them the appropriate polarity, i.e., positive or negative, according to the context.

U.S. Application Ser. No. 13/052,686 (the '686 application), describes a method for collecting single terms which have an invariant polarity (in general or within a given domain). The exemplary system and method enable the extraction of contextual patterns that carry a given polarity, even though the terms within the patterns do not have an invariant polarity. The system and method attempt to detect the polarity of an expression automatically, according to the context, i.e., to learn contextual polarity patterns, for ambiguous polar terms, such as adjectives.

As used herein, an expression found in text is considered as an instance of a pattern if its (normalized) terms are in a syntactic relationship of the type prescribed by the pattern, such as a NOUN-ADJECTIVE (modifier or attribute) relation. A contextual rule for assigning a polarity to expressions specifies a polarity which is to be assigned to an expression which is an instance of a given pattern.

In one exemplary embodiment, each extracted opinion-related pattern ("pattern") includes a syntactic relationship between a first term with an ambiguous polarity ("ambiguous term") and a second term ("supporting term") each of which has been assigned a predefined part of speech within an expression in which the two terms are found. The supporting term may be limited to a predefined class or list of terms.

As an example, only NOUN-ADJECTIVE expressions are considered, where the adjective (ambiguous term) is qualifying the noun (supporting term). Here, both single nouns and noun phrases are considered as the supporting term. These expressions are generally of two types: in the first, the adjective serves as a modifier for the noun and in the second, the adjective serves as an attribute of the noun. Modifiers, in English, are adjectives that can appear before a noun as part of a noun phrase, placed after determiners or numbers if there are any, and immediately before the noun, and are in a modifier relationship, i.e., they modify the noun. In French, they can appear after the noun. Attributes are adjectives which can occur as complements of the verb *be* and other link verbs, such as *become, feel* or *seem*. Adjectives placed after the verb in this way are generally referred to as occurring in the attributive position.

Examples of these expressions are shown in the text strings below, where the noun is underlined and the adjective which is in a syntactic relationship with the noun is bolded:
1. *A style of cooking with **fresh** ingredients*
*2. An **inventive** cuisine*
3. The service is **slow**
4. The price seems **high**.

In the first and second text strings, the adjective serves as a modifier of the noun and in the third and fourth text strings, as an attribute of the noun. Each of these relationships can be extracted by a suitable linguistic parser. The exemplary method allows terms with ambiguous polarity, such as *fresh, slow* and *high,* to be automatically assigned a positive or negative polarity when in the context of particular nouns or classes of nouns. For example, a polar pattern NOUN-MOD(ingredient, fresh) could be extracted by normalizing the terms in the expression *fresh ingredients* in the first example, and a polar pattern NOUN-ATTRIB(price, high) could be extracted from the fourth. To assign a polarity, a semi-automated method disclosed herein makes use of a collection of semi-structured reviews which each include a quantitative opinion of a topic and a textual portion in which such an expression is found. The method may also utilize a preexisting set of invariant polar terms, such as adjectives. Contextual rules based on the extracted polar patterns generated in the method can be stored in a polar lexicon to be used for detecting polar expressions (expressions which are inferred to carry a polarity) in opinion mining.

The patterns generated in the exemplary method are specific rather than general, i.e., each pattern specifies that a specific adjective is in an adjectival (modifier or attribute) relation with a specific noun, or with any one of a small class of nouns, such as up to 10 nouns, rather than with any noun.

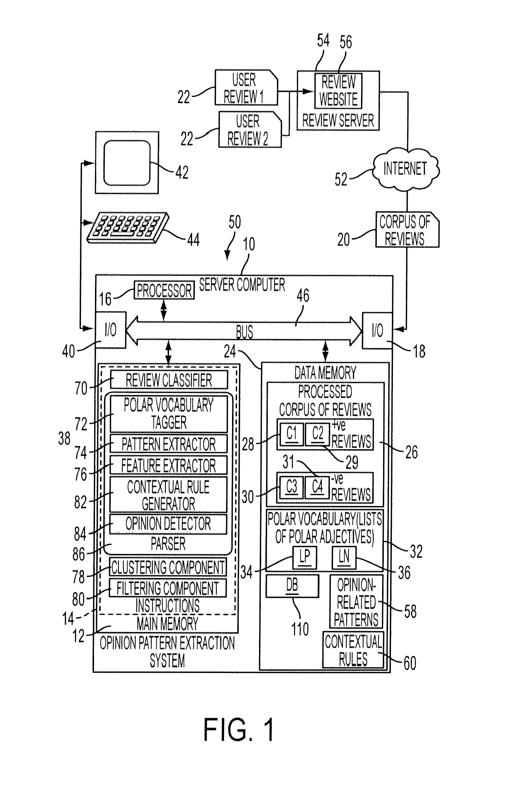

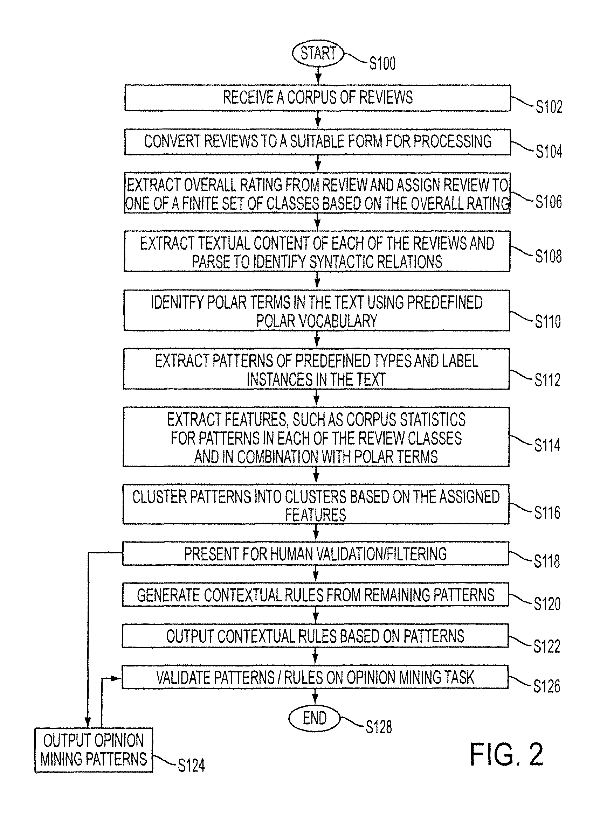

FIGURE 1 illustrates an environment in which an exemplary computer implemented system 10 for extracting opinion-related patterns operates. The system includes main memory 12 which stores instructions 14 for performing the exemplary method described in connection with FIGURE 2 and a processor 16 in communication with the memory 12 for executing the instructions 14. A network interface 18 receives as input a collection 20 of text documents, such as user reviews 22. The reviews may relate to the same or a similar topic in a given domain, such as consumer products or services, or to a specific type of consumer product or service, such as printers or restaurants. Each review is assigned an explicit rating selected from a plurality of possible ratings, which may be submitted by the user with the review or separately assigned by an independent reviewer.

Data memory 24 stores the processed corpus of reviews 26, including sets 28, 29, 30, 31 of the reviews 22 (C1, C2, C3, C4), the reviews 22 in the corpus 20 being partitioned among the sets based on whether they are assigned a positive overall opinion or a negative overall opinion, which may be further quantized as shown into two (or more) positive sets and two (or more) negative sets. Memory 24 also stores a polar vocabulary 32 including first and second lists 34, 36 of terms (LP and LN) which have been assigned an invariant, i.e., unambiguous polarity (e.g., positive or negative), at least in the domain of interest. List 34 includes terms (typically adjectives) labeled positive and list 36 includes terms (typically adjectives) labeled negative. The lists 34, 36 may have been automatically generated by the system 10 itself, or generated elsewhere, either manually or automatically, and input to the system. The polar vocabulary 32 may be generated automatically or semi-automatically according to the method described in the '686 application, or be manually generated. In one embodiment, each list 34, 36 includes at least 20 or at least 50 different terms and the vocabulary 32 may include a total of at least 100 or at least 200 terms, such as up to 1000 or more terms, such as adjectives. No list 34, 36 includes terms that are in the other list(s) and that are assigned the same part of speech.

An interface 40 allows the system to communicate with external devices such as a display device, such as a computer monitor 42, and a user input device 44, such as one or more of a keyboard, keypad, cursor control device, touch screen, or the like. Hardware components 12, 16, 18, 24, 40 of the system 10 may communicate via a data/control bus 46. The system 10 may be hosted by one or more computing devices, such as the illustrated server computer 50. Reviews 20 and polar vocabulary 32 may be input to the system 10 by a wired or wireless link 52, such as a local area network or a wide area network such as the Internet, or input locally from a data storage device, such as a disk, flash memory, or the like. In one embodiment, the reviews 20 are received from a remote server computer 54 which hosts a review website 56 to which users submit their reviews 22 on a given topic. As will be appreciated, the configuration of computing devices 50, 54 is not intended to be limiting and that a single computing device or combination of computing devices may readily be used.

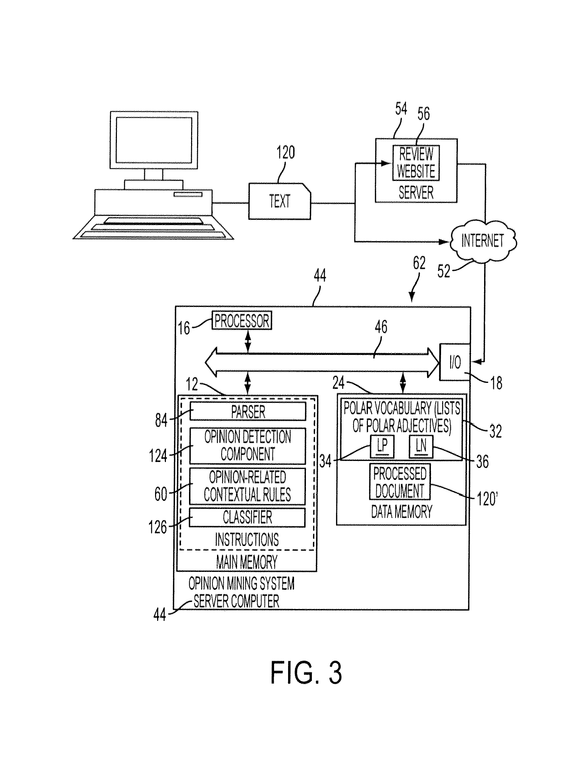

The system 10 is configured for extracting a set of opinion-related patterns 58 and generating contextual rules 60 therefrom, which may be output by the system 10 and used, for example, in an opinion mining system 62 as illustrated in FIGURE 3.

The memory stores a set of components 70, 72, 74, 76, 78, 80, 82, 84 for processing the reviews 22 and extracting opinion related patterns 58 therefrom. In particular, a review classifier 70 quantizes the rating, for example classifies the reviews 22 to identify a positive corpus 28 and a negative corpus 30, based on a reviewer's overall rating in each review. A polar vocabulary tagger 72 identifies and labels instances of terms which are among those stored in the polar vocabulary 32 and which appear in a given review 20. A pattern extractor 74 extracts and labels expressions in the reviews, such as only those expressions in which an adjective either modifies a noun or is an attribute of a noun and normalizes each expression to generate a pattern 58. A feature extraction 76 component extracts features of the reviews 20. In the example embodiment, these features include frequency of occurrence of at least some of the extracted patterns 58 in each of the sets 28, 30, etc. of reviews, as described in more detail below. A clustering component 78 clusters the extracted patterns based on the extracted features. A filtering component 80 selects a set of the clusters, optionally with input from a human reviewer via the user input device 44, and assigns each cluster a respective polarity, which is applied to the patterns in that cluster. A contextual rule generator 82 automatically extracts contextual rules 60 from the remaining clustered patterns 58. In some embodiments, an opinion detection component 84 identifies polar opinions in each review, based on the terms tagged by the polar vocabulary tagger, which are then used by the clustering component 78 as a feature.

Components 70, 72, 74, 76, 78, 80, 82, 84 may be embodied in hardware or a combination of hardware and software and may be separate or combined. Some of the components, such as components 72, 74 80, 82, 84 may be implemented in the form of rules added to the grammar rules of a conventional syntactic parser 86.

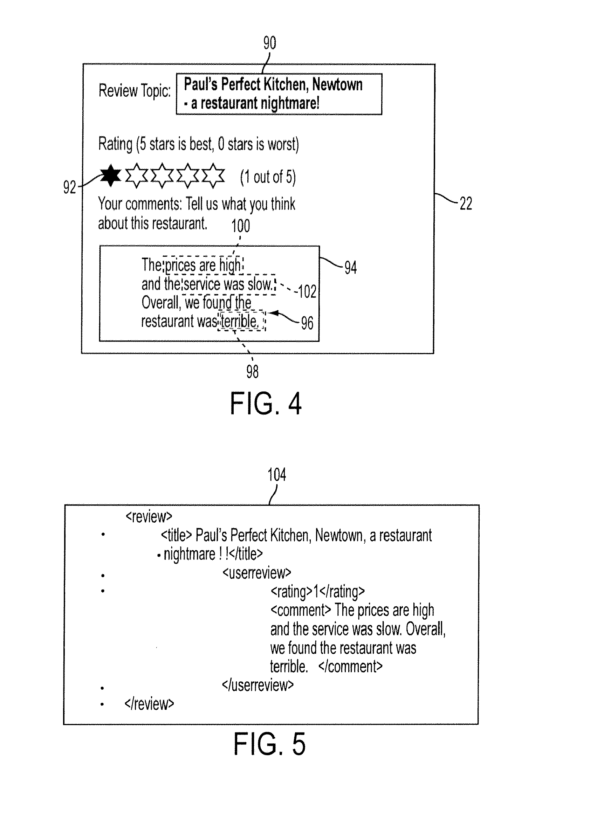

FIGURE 4 illustrates an exemplary user review 22, for explanation purposes only. As will be appreciated, such reviews may assume a variety of formats, depending on the template provided by the review website 56, and may be submitted electronically to the review website. The review may be converted to a suitable format for processing, such as an XML format, in which the relevant fields of the review are identified with XML tags, as illustrated in the XML document 104 shown in FIGURE 5. The review template 22 specifies a topic 90, such as a restaurant review, and the reviewer may enter the name of the restaurant, if not included on the template. The template also includes a rating field 92 where a reviewer supplies an overall rating of the reviewed topic, which is an explicit expression of the reviewer's opinion of the topic. In the exemplary embodiment, the reviewer allocates a number of stars, 0 being worst and 5 being best. As will be appreciated, any quantitative or qualitative rating scheme may be used from which the system 10 can extract a polarity of the rating. In the illustrated case, the review classifier 70 of the system 10 would extract a quantized overall rating of 1 and consign the review to the set 31 of very negative reviews C3 with that overall rating. In the exemplary embodiment, the review classifier 70 partitions the reviews into more than two sets, such as three, four, five, or more sets, e.g., one set for each of a plurality of possible positive ratings and one set for each of a plurality of possible negative ratings e.g., using the rating scheme of the review template. In some embodiments, reviews 22 which are neither positive nor negative (e.g., a rating of 2 or 3 in the example review marking scheme) are discarded as lacking polarity. Thus for example, the remaining reviews are partitioned into four sets, 28, 29, 30, 31, etc. Reviews with more than about five or six discrete possible values may be quantized into a set of, for example, four or five ranges and the sets 28, 29, 30, 31, based on those.

The review includes a free text field 94 in which a user can enter text 96 comprising one or more text strings (e.g., complete sentences, ending with a period, exclamation, or question mark, or shorter text strings, such as phrases, or the like) in a natural language, such as English or French, which has its own grammar. In general, the user is instructed to provide a comment on the topic which is the subject of the review, but is generally free to enter any text whatsoever which fits within the field 94. The text may include one or more terms 98, such as words or phrases, which appear in the polar vocabulary, such as the word *terrible* in the example. These terms are identified and labeled by the polar vocabulary tagger 72. Words of negation, such as *not,* and diminishers such as "little", "less", etc. which modify the polar term, may also be identified by the polar vocabulary tagger 72, and used to reverse or modify the polarity of the identified polar vocabulary term. The text may further include one or more expressions 100, 102 which are extracted by the pattern extractor 74. In the exemplary embodiment, the pattern extractor only extracts NOUN-ADJECTIVE type expressions, where the adjective modifies/is an attribute of the noun, and which do not include one of the terms which have been labeled as being in the polar vocabulary. Thus, in the example review, the pattern extractor 74 extracts the expressions *prices are high* and *service was slow,* but not the expression *restaurant was terrible.* The pattern extractor 74 normalizes the expressions to a formalized pattern 58, such as: (price, high) and (service, slow) in the example review, optionally also identifying the form of the adjectival term as being attribute or modifier. The feature extractor 76 counts the number of occurrences of each of the extracted patterns 58 in each of the sets of reviews 28, 29, 30, 31 etc., and assigns a set of feature values to each pattern based on these occurrences. Features may also be assigned based on the co-occurrence of positive and negative polar terms 98 in text with the extracted expressions. Thus, from the review 22 in FIG. 4, the feature extractor 76 may increment a negative polar term feature value by 1 for each pattern (price, high) and (service, slow) based on their co-occurrence with *terrible* in the same free text field 94. In the example embodiment, the expression which is an instance of an extracted pattern, and the polar term need not appear in the same sentence to be considered as co-occurring. In some embodiments, fields other than the free text comments field 94, such as the title of the review 90, may be considered as sources of the polar terms 98, although in the exemplary embodiment, these are not considered as, for example, the name of the restaurant or other topic could have been selected to be positive, such as *Paul's Perfect Kitchen,* or the *Magic Printer 1000.* The clustering component 78 partitions the patterns into a set of clusters, such as at least 5, or at least 10 and up to 100 clusters, based on such features extracted from the collection 20 of reviews and assigns an overall polarity to each cluster, such as positive or negative.

The filtering component 80 then filters the clusters, optionally with input from the human reviewer, to select suitable clusters. The remaining patterns 58 are used by the contextual rule generator 82 to identify a set of contextual rules 60 based on the patterns. For example a given rule 60 could express the requirement that if an expression which is an instance of the pattern NOUN-ADJ(price, high) is found in a new review or other text in the domain of interest, then the adjective in that expression is labeled with a negative polarity. As a result, the review, or at least the text string from which it is extracted, may be considered negative. The identification of other expressions that are instances of a rule 60 and/or polar vocabulary terms 32 in the same review may also factor into the overall rating for the review. As will be appreciated, the extracted patterns and contextual rules find application in other opinion mining applications, beyond that of characterizing reviews, particularly when limited to the specific domain of interest, such as the topic of restaurants in the example.

FIGURE 2 outlines the exemplary method for generating contextual rules for opinion-related patterns and which can be performed with the apparatus of FIGURE 1. Briefly, the method is based on the use of the structure of the reviews, in particular the reviewer's global ranking of the topic discussed (e.g., a mark, percentage, score, or quantifiable verbal description) as well as the use of deep syntactic information extraction and opinion detection and clustering.

The method begins at S100. At S102, a corpus of reviews on a topic is received into memory 24.

At S104, the reviews may be converted to a suitable form for processing.

At S106, the review classifier 70 classifies each review 22 based on its overall rating 92 and assigns it to a respective one of a predetermined finite set of review classes 28, 29, 30, 31.

At S108, the comments text 96 of the review is extracted from the free text field 94 (or retrieved from the corresponding portion of the XML document 104). The text 96 may be processed by the linguistic parser 86 of the system 10, which first tokenizes the text into a sequence of tokens, each generally corresponding to a word, numeral, or punctuation. The parser 86 assigns candidate parts of speech (POS), such as noun, verb, adjective, adverb, to each word, which may be refined to a single part of speech per word as ambiguities are resolved. Proper nouns and Named Entities may also be identified and tagged as nouns for purposes of the expression extraction. Further analysis by the parser 86 (called chunking) optionally allows words to be grouped around a head to form noun phrases, adjectival phrases, and the like.

At S110, at a suitable point in the parsing process, polar terms 98, such as polar adjectives, are identified in the comments text 96. For example, the polar vocabulary tagger 72 compares the words and phrases in the comments, that have been tagged with the part of speech ADJECTIVE, with the terms in the polar vocabulary 32, and any terms that are found in the polar vocabulary are tagged as polar terms and assigned a polarity based on the assigned polarity of the respective term in the polar vocabulary 32. This step serves to filter out patterns that would be marked as positive, negative, or neutral based simply on the presence of an unambiguously polar term.

At S112, expressions of the predetermined type (s) are extracted, such as NOUN-ADJECTIVE expressions and normalized to form patterns. In particular, syntactic analysis by the parser extracts syntactic relationships between POS-labeled terms (words and/or phrases). These relationships are sometimes referred to as dependencies. Syntactic relations are thus found between terms which need not be consecutive and which can be spaced by one or more intervening words within the same phrase or sentence. Coreference resolution (anaphoric and/or cataphoric) can be used to associate pronouns, such as *he, she, it* and *they* with a respective noun, based on analysis of surrounding text, which need not necessarily be in the same sentence. For example, from the text: *"The food was served later.* It *seemed very cold...",* the pattern NOUN-ADJ (food, cold) could be extracted by the pattern extractor 74 rules of the parser. As with the individual polar terms 98, words of negation which are in a syntactic relation with the adjective in the expression may be considered. For example, these negated expressions may be simply ignored.

At S114, features are extracted from the corpus of reviews 22, by the feature extractor 76, for each normalized, extracted pattern. The patterns extracted from all of the semi-structured reviews (or at least from those reviews which are assigned to one of the classes 28, 29, 30, 31 of interest, and/or which meet predetermined constraints), are listed in a database table 110 (DB) or other suitable data structure (FIGURE 1, and see example in TABLE 2 below), and the feature values are entered in the corresponding slots of the database table 110. In one embodiment, for each pattern, at least four feature values are assigned.

At S116, the patterns are clustered into a finite set of clusters by the clustering component 78, each cluster having an assigned polarity. The entries in the database table 110 may be reordered based on the cluster assignments (see example in TABLE 3 below).

At S118, the clusters are filtered and a polarity is assigned to patterns in selected ones of the clusters. This step may be performed automatically, manually, or semi-automatically. For example, the clusters may be presented by the filtering component 80 to an expert reviewer (one or more human reviewers) for review, e.g., on display device 42 and selections of the expert are received by the system. The result of this step is the labeling of at least some of the patterns in at least a subset of the clusters with a polarity, such as positive or negative.

At S120, contextual rules are generated for each of the remaining patterns, such as: "Label ADJECTIVE in NOUN-ADJ(price, high) as NEGATIVE". In some cases, a group of similar patterns may be grouped into a single contextual rule, such as: "Label ADJECTIVE in NOUN-ADJ(price or bill or cost, high or exorbitant or excessive) as NEGATIVE".

At S122, the contextual rules 60 are output and/or stored for use in an opinion mining system. Alternatively or additionally, the patterns 58 labeled according to polarity are output by the system at S124.

Optionally, at S126, the patterns/rules are validated on an opinion mining task. Rules/patterns which increase the performance of a selected opinion mining task may be retained while those that do not may be discarded. Performance may be evaluated in terms of retrieval and/or precision, depending on the nature of the task. In one embodiment, the task is to label instances of opinion related patterns in reviews and to classify the review based on an overall polarity of the instances of the patterns and optionally of any other opinion instances extracted (for example, using the polar vocabulary).

The method ends at S128.

As will be appreciated, the steps need not all proceed in the order illustrated and the method may include fewer or more steps. Further details of the system and method will now be provided.

As discussed above, the exemplary method is based on the use of deep syntactic information combined with frequencies. It also relies on the use of corpora 20 of semi-structured reviews, where the author of the review about a given product, book, movie etc. gives an explicit mark 92 to the object reviewed (for example from 0 to 5 stars). In general, the corpus 20 of reviews may be specific to a selected domain, since ambiguously polar terms can change their polarity according to the domain, even when a pattern is specified. For example, the pattern (time, long) may have a negative polarity in the domain of restaurant reviews but may have a positive or neutral connotation in reviews of movies or theatrical performances.

In the exemplary method, those lemmatized dependency patterns of the MODIFIER and ATTRIBUTE types that already have polar arguments are excluded from the rule generation, since adjectives in instances of these patterns are automatically marked as positive/negative/neutral based on the polar terms themselves. However, if no polar vocabulary is available or if the user wishes to create contextual rules which include the polar vocabulary terms, these could be included in the contextual rules. Thus, for example, a polar term in vocabulary could retain its assigned polarity except in cases where the contextual rule applies to change that polarity.

### Generating the corpus of reviews

In the exemplary embodiment, reviews relating to only one domain, such as a general class of goods or services are selected to form the corpus 20 of reviews. In this way, the contextual rules 60 are domain specific. For example, for generating a contextual rules specific to printers, only those reviews expected to relate to printers may be included in the corpus. For example, reviews may be filtered using keywords and/or by using the structure of the opinion website 56, for example, to identify reviews relating to goods offered for sale by a predetermined set of known printer manufacturers. While printers are described as an example, other classes of goods and services are also contemplated. The system may generate different sets of rules for different domains, using two or more domain-specific corpora 20.

In general, the corpus 20 used in the system and method includes a large number of reviews 22, such as at least 100 or 1000 or more reviews. The reviews are generally submitted by multiple different authors, each operating on a respective client device, although it is contemplated that some of the reviews may have been submitted by the same author and/or from the same client device.

### The Parser

The parser 86 takes a text string, such as a sentence, paragraph, or even a sequence of a few words as input and breaks each sentence into a sequence of tokens (linguistic elements) and associates information with these. The parser 86 provides this functionality by applying a set of rules, called a grammar, dedicated to a particular natural language such as French, English, or Japanese. The grammar is written in a formal rule language, and describes the word or phrase configurations that the parser tries to recognize. The basic rule set used to parse basic documents in French, English, or Japanese is called the "core grammar." Through use of a graphical user interface, a grammarian can create new rules to add to such a core grammar. In some embodiments, the syntactic parser employs a variety of parsing techniques known as robust parsing, as disclosed for example in U.S. Patent No. 7,058,567

In one embodiment, the syntactic parser 86 may be based on the Xerox Incremental Parser (XIP), which may have been enriched with additional processing rules to facilitate the extraction of nouns and adjectival terms associated with these. Other natural language processing or parsing algorithms can alternatively be used.

The incremental parser 86 performs a pre-processing stage which handles tokenization, morphological analysis and part of speech (POS) tagging. Specifically, a preprocessing module of the parser breaks the input text into a sequence of tokens, each generally corresponding to a text element, such as a word, or punctuation. Parts of speech are identified for the text elements, such as noun, verb, etc. Some tokens may be assigned more than one part of speech, and may later be disambiguated, based on contextual information. The tokens are tagged with the identified parts of speech.

A surface syntactic analysis stage performed by the parser includes chunking the input text to identify groups of words, such as noun phrases and adjectival terms (attributes and modifiers). Then, syntactic relations are identified, such as a relationship between a subject and a modifier which modifies it or an object and an attribute which describes it.

Where reviews are expected to be in multiple languages, such as on a travel website, a language guesser may be used to detect the main language of the review 22 and an appropriate parser 86 for that language is then employed.

The parser is used to extract, from the sets 28, 29, 30, 31 of reviews, modifiers and attributes that are in a (syntactic) relation with a word which is classed as a noun. For example, given the review:
*User Rating: 1 star.*
*Review Summary: Do NOT buy this! Pros: None. Cons: Poor design, cheap construction, expensive cartridges.*
   the system extracts:
   MODIFIER(poor, design)
   MODIFIER(cheap, construction)
   MODIFIER(expensive, cartridge)

In another example, given the review:
*Paul's menu is great.*
The system extracts:
   ATTRIBUTE(menu, great).

The parser 86 also detects negation. This information is taken into account since negation on polar terms in vocabulary 32 has the property of inverting polarity. For example, given the review:
*The restaurant is decent but not great.*
the system extracts:
   ATTRIBUTE(decent,restaurant)
   ATTRIBUTE_NEG(great,restaurant).

The parser may be instructed to filter out certain adjectives which are not likely to be of interest in generating contextual patterns 58, such as adjectives of color (e.g., *grey* building), adjectives relating to time or age (e.g., *old* printer), adjectives relating to measures (*large* room), and adjectives denoting a country (*Japanese* restaurant). The types of objective adjectives which are filtered out may, in some cases, be domain specific.

In some embodiments, the parser 86 may include a coreference module which identifies the noun which corresponds to a pronoun by examining the surrounding text.

### Pattern Extraction (S112)

The pattern extraction step involves identifying those syntactic relations in the textual portion 96 of the review which are of the specified type, such as NOUN, ADJECTIVE. Each syntactic relation is lemmatized and used to generate a pattern which is the lemmatized form of the terms in the syntactic relation. Patterns of the type ATTRIB(adjective X, noun Y) and/or MOD(adjective X, noun Y) may be generated, where X and Y in a given pattern represent lemma forms of a specific adjective and specific noun, respectively, such as *lovely* and *restaurant.* In some embodiments, the patterns may be grouped together as ATTRIB-or-MOD(adjective X, noun Y). For nouns, the lemmatization for English generally involves converting the noun to its singular form, if it is in the plural form in the syntactic relation. For other languages, there may be additional rules based on gender or the like. In English, lemmatization of adjectives generally entails no changes. For other languages, a common gender form may be selected. For example, in French, the lemma *bel* (beautiful) may be used in the pattern for male, female, singular, and plural instances *bel, belle, belles,* and *beaux.* If there are two adjectives which modify the noun, each may be used to generate a separate pattern. Once a pattern 58 has been generated, all instances of that pattern in the text of the reviews are identified as instances of it, and may be labeled accordingly. Patterns which have less than a threshold number of instances in the partitioned corpus may be discarded.

The method is not limited to patterns of the noun, adjective type, however. The method may also be applied, for example, to other types of syntactically relevant patterns, for example subject(word1,word2) or object(word1,word2).

### Feature Extraction (S114)

Various features are contemplated for use in clustering the patterns. For example, each pattern may be assigned from 2 to 20 features, such as from 4-10 features. These features may be based on at least one of a) the class(es) to which the reviews that have instances of the patterns are assigned and the presence of instances of the polar vocabulary/automatically detectable opinions in the reviews in which the instances of the patterns are found.

In one embodiment, for each pattern extracted, the frequency of occurrence is computed within reviews of each of a set of possible classes, C1, C2, C3, C4, into which at least some of the reviews are partitioned based on their global rating of the topic. Thus, for example, if the classes correspond to scores of 0, 1, 4, and 5 on the 5 star user rating scheme, to determine the frequency of occurrence in each class, the system counts how many times the expression occurs in the all reviews assigned a score of 0 stars, 1 star, 4 stars and 5 stars, respectively, and assigns a value for each based on the count. The feature value for each class can be the total number of occurrences, or a function thereof, such as a ratio or percentage of the total number of occurrences to the total number of the reviews or the number of reviews in that particular class. As a result, in the case of four classes, a feature value may be assigned to a given pattern for each of 4 features and stored in appropriate slots in the database table. As will be appreciated, different features could be based on the occurrences, such as a feature value which is based on a ratio of the frequency of occurrence in one class to a frequency of occurrence in another class.

In one embodiment, as a feature or features, the number of positive opinions and negative opinions that co-occur with the patterns is also counted. For this, the feature extractor may include or call on an existing opinion detection component 84. In general, the opinion detector 84 relies on the polar vocabulary 32 and any terms of negation (which reverse the assigned polarity) to identify expressions in which any of the polar terms is present. For each instance of a polar term, an opinion may be extracted. Its polarity may be the same as that associated with the polar term unless the polarity is reversed by evidence of negation. In other embodiments, constraints may be placed on those expressions which are considered instances of opinions.

For example, two features are generated, one which is based on the number of positive opinions which are present in reviews where the pattern is also found, and one which is based on the number of positive opinions which are present in reviews where the pattern is also found. In the exemplary embodiment, for each pattern, the positive feature is incremented by one each time a positive opinion is found that co-occurs in the same text as the given pattern and the negative feature is incremented by one each time a negative opinion is found that co-occurs in the same text as the given pattern. In the example embodiment, the positive or negative opinion does not need to be detected in the same sentence as long as it appears in the same review as the given pattern. Also, a single sentence may include both positive and negative opinions.

In another embodiment, a single feature which takes into account both positive and negative opinions could be generated, for example, by subtracting one from the other.

The values of each of the features may be normalized or otherwise modified if appropriate.

A suitable opinion detector 84 suitable for tagging positive and negative opinions in text is described, for example, in Caroline Brun, "Detecting Opinions Using Deep Syntactic Analysis." Proc. Recent Advances in Natural Language Processing (RANLP), Hissar, Bulgaria, (September 12-14, 2011), hereinafter, Brun 2011, and in the '686 application, although any other opinion detection system which uses polar terms to identify positive and negative opinions in text is also contemplated. See, for example, Bing Liu "Sentiment Analysis and Subjectivity," in Handbook of Natural Language Processing (Eds. N. lndurkhya and F.J. Damerau, 2010) and example systems such as Radian 6™, available from Salesforce Radian6, Fredericton, NM Canada, or ClaraBridge 5.1™ available from Clarabridge, Reston, VA 20191.

### Clustering (S116)

Clustering techniques are well known and any suitable feature-based clustering algorithm may be employed for grouping the patterns into clusters.

In one embodiment the algorithm groups patterns into clusters using clustering techniques using the class based features and opinion co-occurrence based features described above, in order to group positive and negative patterns in different clusters.

The number of clusters may be defined by the expert or the clustering system itself may determine an optimum number of clusters, perhaps within certain constrains, such as an upper and/or lower limit on the number of clusters, and/or that each cluster must include at least a threshold number of patterns and/or no more than a maximum number of patterns. In some embodiments, different numbers of clusters may be selected and the results of several clusterings investigated.

In this step, the aim is to cluster together patterns in order to group them according to their polarity. The frequencies per type of review and the number of co-occurring positive and negative opinions may be used as features. Suitable clustering algorithms include K-means clustering, spectral clustering, and the like. The clustering may be by unsupervised clustering or by partially supervised clustering. Experiments can be performed to identify an optimum number of clusters. While it is possible to weight the features before clustering, it is generally not necessary.

Clustering algorithms are described, for example, in U.S. Pub. No. 2003/0101187 and U.S. Pat. No. 7,139,754.

### Filtering (S118)

Not all the clusters are useful as sources of patterns which are useful in opinion mining. In general, only a subset of the clusters is selected, such as the first few clusters (when ranked by increasing size), such as from 5 to 20 clusters, or up to about 70% of the clusters, such as less than 50% of the clusters. These clusters can be selected by the human reviewer in the filtering step (S118), or a predetermined number may automatically be selected by placing thresholds on one or more of the features, for example. From these clusters, the user may select patterns and assign a polarity to each, to provide polar patterns.

The reviewer may be requested/permitted to exclude certain clusters from further consideration and/or exclude individual patterns from certain clusters. These entries are then deleted from the database table 110. In other embodiments, at least part of the filtering may be performed by the filtering component itself, based on a predefined set of rules, to exclude less interesting clusters. For example, the filtering component may be instructed to rank clusters by number of patterns, starting with a rank of 1 for the cluster with the fewest patterns and exclude those ranked 20 and above. In some embodiments, the reviewer is requested to assign or validate the polarity given to each retained cluster. For example, the user identifies a subset (less than all) of the clusters, and from these selects a set of patterns and assigns each of the patterns a polarity.

In another embodiment, the system 10 may automatically add clusters from the set of clusters incrementally to an opinion mining system 62 and determine if the performance of the system improves. As long as the performance continues to improve more clusters are added. This method could also be used to determine the polarity of the expressions in the cluster, since a cluster of expressions which is assigned the opposite polarity to what should have been assigned will generally result in a decrease in performance of the system 62. In this embodiment, the performance of the opinion mining system may be evaluated with the patterns in the cluster all labeled as positive and then with the patterns all labeled negative. The best performance is then used to determine whether to assign the label positive or negative to the patterns in the cluster. In another method, the cluster may be assigned a polarity based, for example, on the ratio of positive to negative opinions in the cluster.

### Contextual Rule Generation (S120)

The rule generator may generate the contextual rules in a suitable computer language for implementing by an opinion mining system. For example, if a pattern ATTRIB(adjective X, noun Y) has been found which has been assigned to a positive cluster, a contextual rule may specify:
IF Extract ATTRIB(adjective X, noun Y),
THEN generate OPINION[POLARITY POSITIVE](X,Y)

Another contextual rule based on a similar pattern but a different noun may specify:
IF Extract ATTRIB(adjective X, noun Z),
THEN generate OPINION[POLARITY NEGATIVE](X,Z)

The same adjective may thus generate opinions of different polarity when instances are found in text, depending on the context, i.e., depending on the whether the noun is Y or Z. These rules thus differ from those applied to the polar vocabulary, which are generally context independent, except for the presence of negation. In each pattern, both the noun and the adjective are specified, i.e., limited to a noun with a specific lemma form or to a list of specific nouns. For example, one list could specify (NOUN Z is *restaurant* or *bar,* or *bistro*), in the restaurant context.

The rules may specify the role of the specific adjective as above, e.g., as modifier or attribute, or may accept either, i.e., specify it simply an adjective. The rules may specify the role of the specific noun as a subject or object or accept either.

### Validation/Filtering (S118)

This step may include selecting and validating the clusters of expressions denoting positive or negative opinions.

This step may include providing for the reviewer to assign a polarity to each of at least some of the clusters, if not automatically assigned by the system. The reviewer can readily check the members of the cluster an assign a polarity to the cluster in many cases since the clustering algorithm generally groups together patterns into a cluster that a human would consider to have the same polarity. Any errors in the group of patterns forming the cluster can readily be identified and discarded, or otherwise processed. The human input does not take much time, when compared with the large number of patterns and instances which can be identified.

In this way at least 20, or at least 50, or at least 100 patterns 58 can be quickly assigned a respective polarity, e.g., selected from positive and negative, and each of the polar patterns used to generate a respective contextual rule.

### Opinion Mining

FIGURE 3 illustrates an opinion mining system 62 which may be similarly configured to the system 10 of FIGURE 1, except as noted. Similar elements are accorded the same numerals. In some embodiments, the system 10 and system 62 may be resident on the same computing device.

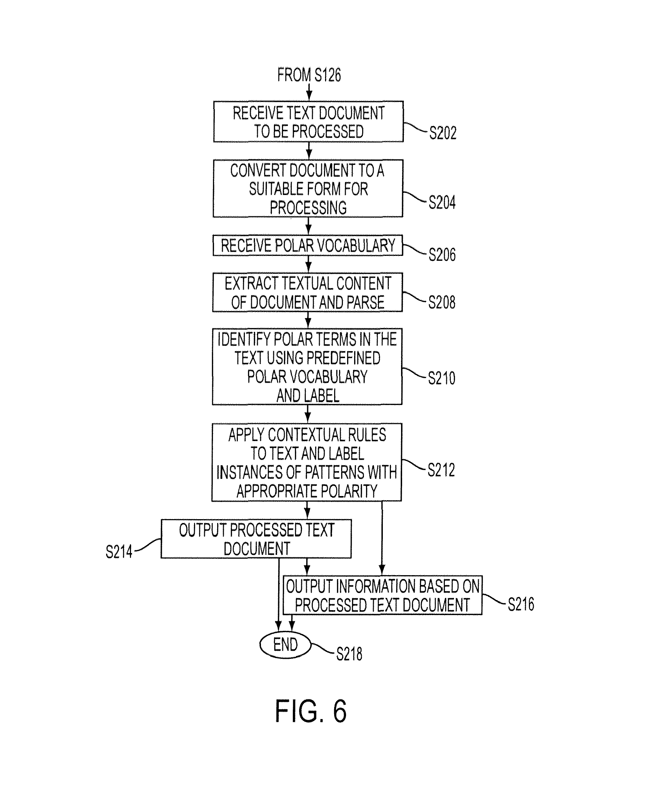

The system includes main memory 12 which stores instructions 14 for performing the exemplary method described in connection with FIGURE 6 and a processor 16 in communication with the memory 12 for executing the instructions 14. A network interface 18 receives, as input, a text sample 120, in electronic form, which may be in the same domain as the user reviews 22, and could include one or more user reviews (FIG. 6, S202). The text sample may include one or more text strings in the form of sentences, paragraphs, or the like in a natural language, such as English or French. Data memory 24 stores the text document 120 during processing. The text document 120 may be converted by the system 60 to a suitable form for processing such as an XML document (FIG. 6, S204). Memory 24 may also receive and store a polar vocabulary 32 including first and second lists 34, 36 of terms (LP and LN) which have been assigned an invariant polarity (positive or negative), at least in the domain of interest (FIG. 6, S206). The lists 34, 36 may have been automatically generated by the system 62 itself, or generated elsewhere and input to the system. The polar vocabulary 32 may be generated automatically or semi-automatically according to the method described in the '686 application, or be manually generated.

The system includes a parser 86 which processes the input text to identify syntactic relations between words, such as between nouns and adjectives, analogous to the parser of system 10 (FIG. 6, S208). An opinion detection component 124, which may be implemented as rules on top of the parser rules, identifies words in the text which are within the polar vocabulary and assigns them a polarity based on whether they are in the positive corpus 34 or negative corpus 36, taking into account words of negation which the parser has recognized as modifying the polar terms. The opinion mining component labels these instances as opinions with a respective polarity, such as positive or negative (S210). The opinion mining component then applies the contextual rules 60 to the text and labels the words that are instances of any of the patterns with the polarity specified by the rules (S212).

In the case of XML documents, the labels may be XML tags or other labels within or exterior to the document may be generated. The opinion mining component may output the processed text 120' which includes the labels of the opinions that it has identified (S214). Alternatively or additionally, the opinion mining component may generate information based thereon (S216), such as an overall polarity of the opinion, such as positive, negative or neutral, based on the opinion instances that have been found in the text. For example, the system 62 may include a classifier 126 which has been trained on a set of documents labeled according to polarity. The labels may be selected from positive, negative and optionally neutral, or be more fine grained, such as very negative, or assigned a score, such as 0 for very negative, 1 for somewhat negative, 2 and 3 for about neutral, 4 for somewhat positive, 5 for very positive, awarded a percentage, or any other quantitative rating scheme. The trained classifier takes as input the instances of polar opinions identified by the opinion detection component and outputs a global polarity rating. In some embodiments, the overall polarity may be compared with a global opinion 92 input in an opinion field of the document as in the review of FIGURE 4, to determine if they are compatible. A warning may be output if a determination is made that the two are not compatible. The method ends at S218.

A specific example of an opinion mining component system is one which serves as a component of an authoring assistant, as disclosed, for example, in above-mentioned Application Ser. No. 13/052,774. The authoring assistant disclosed in that application enables the user to modify a review to reduce the inconsistency between the review and the author's rating.

In FIGURES 1 and 3, the computer device 50 may be any suitable computing device or devices, such as a PC such as a desktop computer, laptop, palmtop computer, portable digital assistant (PDA), server computer, cellular telephone, tablet computer, pager, combination thereof, or other computing device capable of executing instructions for performing the exemplary method described with respect to FIGURE 2 and/or 6.

The memory 12, 24 may represent any type of non-transitory computer readable medium such as random access memory (RAM), read only memory (ROM), magnetic disk or tape, optical disk, flash memory, or holographic memory. The network interface 18 allows the computer to communicate with other devices via a computer network, such as a local area network (LAN) or wide area network (WAN), or the internet, and may comprise a modulator/demodulator (MODEM) a router, a cable, and and/or Ethernet port.

The digital processor 16 can be variously embodied, such as by a single-core processor, a dual-core processor (or more generally by a multiple-core processor), a digital processor and cooperating math coprocessor, a digital controller, or the like. The digital processor 16, in addition to controlling the operation of the computer 50, executes instructions stored in memory 12 for performing the method outlined in FIGURE 2 and/or 6.

The method illustrated in FIGURE 2 and/or FIGURE 6 may be implemented in a computer program product that may be executed on a computer. The computer program product may comprise a non-transitory computer-readable recording medium on which a control program is recorded (stored), such as a disk or hard drive.

The exemplary method may be implemented on one or more general purpose computers, special purpose computer(s), or any device, capable of implementing a finite state machine that is in turn capable of implementing the flowchart shown in FIGURE 2 and/or FIGURE 6.

### EXAMPLE

In the context of opinion mining or sentiment mining, one of the tasks involves classifying the polarity of a given text or feature/aspect level to find out whether it is positive, negative or neutral. The basic idea of feature based sentiment mining is to determine the sentiments or opinions that are expressed on different features or aspects of entities. When text is classified at document level or sentence level it might not tell what the opinion holder likes or dislikes. If a document is positive on an item it clearly does not mean that the opinion holder will hold positive opinions about all the aspects or features of the item. Similarly if a document is negative it does not mean that the opinion holder will dislike everything about the item described.

The example uses a system for performing feature-based opinion mining described in the '686 application. The opinion extraction system is designed on top of a robust syntactic parser, the XIP parser, described in U.S. Patent No. 7,058,567 and Aït-Mokhtar, et al., "Robustness beyond Shallowness: Incremental Dependency Parsing," Special Issue of NLE Journal (2002). This parser is able to extract deep syntactic dependencies, which are an intermediary step of the extraction of semantic relations of opinion. The system uses a polar lexicon combined with syntactic dependencies extracted by the XIP parser to generate opinion relation extraction rules.

### Corpus

A large corpus of online user's reviews about restaurants in French was extracted from a French restaurant review website. The reviews in html format were cleaned and converted to xml format. An example corpus collected as described above contains 99,364 user's reviews of about 15,473 different restaurants and which include 260,082 sentences (3,337,678 words). The partition of the reviews according to the marks given by the users is shown in TABLE 1.

**TABLE 1**

| USER'S MARK | 0/5 | 1/5 | 2/5 | 3/5 | 4/5 | 5/5 | TOTAL |
|---|---|---|---|---|---|---|---|
| Number of reviews | 2508 | 8810 | 7511 | 14,142 | 41,382 | 25,011 | 99,364 |

### Pattern Extraction

In extracting the patterns, the aim is also to classify them as positive or negative. The XIP parser was used to detect deep syntactic relations (i.e., relations in which the adjective in a syntactic relation is labeled as modifier or attribute and the noun is labeled as subject or object). As an opinion detection system, the opinion detection system, the opinion detection component of Brun 2011 was used on top of the robust parser.

Patterns that are already marked as positive and negative by the opinion detection system are filtered out (because they contain single polar terms that are encoded in the polar lexicon of the system) and only the patterns that do not carry any information about polarity are kept. The parser outputs syntactic relations among which the noun-adj modifiers and noun-adj attributes are selected. Then, the number of occurrences of these relations within reviews rated 0, 1, 2, 3, 4 and 5 are counted. In the example case, this provided a list of 29,543 different NOUN-ADJ relations together with their number of occurrences per class of review. The system counts the number of time a given pattern co-occurs with positive opinions and with negative opinions extracted by the opinion detection component 84, on the whole corpus of reviews. Some examples of the results are shown in TABLE 2.

**TABLE 2**

| NOUN-ADJ RELATIONS | NUMBER WITH MARK OF | | | | | | NO. OF +VE OPINIONS CO-OCCURRING | NO. OF -VE OPINIONS CO-OCCURRING |
|---|---|---|---|---|---|---|---|---|
| | 0/5 | 1/5 | 2/5 | 3/5 | 4/5 | 5/5 | | |
| abonn6,absent | 0 | 2 | 0 | 1 | 0 | 0 | 2 | 3 |
| abricot,croquant | 0 | 1 | 0 | 0 | 0 | 0 | 4 | 4 |
| addition,convenable | 0 | 0 | 0 | 1 | 1 | 0 | 6 | 0 |
| estomac,solide | 2 | 0 | 0 | 0 | 0 | 0 | 5 | 0 |
| service,minimum | 1 | 4 | 5 | 3 | 0 | 0 | 21 | 11 |
| service,lent | 30 | 87 | 71 | 71 | 64 | 10 | 707 | 399 |
| service,rapide | 19 | 59 | 89 | 424 | 1024 | 379 | 5920 | 514 |
| qualit6, gastronomique | 0 | 1 | 2 | 2 | 6 | 6 | 55 | 7 |

Each of the values in the table was used as a feature of the respective (noun, adjective) pair, thus each pattern has eight features.

### Clustering

In this step, the aim is to cluster together patterns with similar behavior, based on their features, in order to group them according to their polarity. The frequencies per type of review and the number of co-occurring positive and negative opinions are used as features for the example clustering algorithms tested. As an example, the Weka (Waikato Environment for Knowledge Analysis) software that embeds a collection of machine learning algorithms for data mining tasks is used, among which several clustering algorithms are proposed (see, Ian H. Witten, et al., above). Several of the algorithms in this suite were tested and the K-means algorithms were chosen as giving fast and useful results. These algorithms may treat the set of features as a vector and measure the distance between the vectors, such as the cosine distance. Several numbers of clusters were tried as the target for the algorithm, as there was a relatively large amount of data to cluster (-30,000 patterns). The aim was to have a trade-off between number of clusters and precision of the results: a too small number of clusters gives imprecise results, a too large number of clusters could be difficult to evaluate and useless (for example, above about N=60 clusters, a lot of clusters contain only 1 element, which is not useful). It was found that a good trade-off was with the number N of clusters being 50. These clusters were reordered from the smallest to the largest, since the smallest clusters tend to be the more precise and also contain the most frequent elements, and therefore are considered the more productive and useful in the method. TABLE 3 below illustrates the content of the first clusters (together with the associated numerical features).

**TABLE 3**

| CLUSTER | NOUN-ADJ RELATIONS | FEATURES (THE 8 FEATURES IDENTIFIED IN TABLE 2 ABOVE) | LOOSE TRANSLATION | POLARITY |
|---|---|---|---|---|
| 1 | prix, élevé, | 41,77,45,57,62,15,541,321 | *high, price* | -ve |
| | service, lent | 33,107,92,95,80,13,707,399 | *slow, service* | |
| | attente, long | 31,69,70,50,60,14,521,342 | *long, wait* | |
| | service, long | 69,280,233,255,218,37,1637,1012 | *long, service* | |
| | accueil, froid | 35,95,53,33,29,3,297,223 | *cool, reception* | |
| 2 | cuisine, simple, | 4,25,56,225,362,109,1910,133 | *simple, cooking* | +ve |
| | restaurant, petit, | 8,26,32,213,608,244,2286,182 | *small, restaurant* | |
| | produit, frais, | 7,24,45,246,1049,637,5138,324 | *fresh, product* | |
| | prix, abordable, | 3,11,17,102,363,250,2117,101 | *affordable, price* | |
| | service, rapide, | 22,72,117,478,1180,433,5920,514 | *service, fast* | |
| | cuisine, original, | 2,10,23,115,451,210,1949,115 | *cooking, original* | |
| | service, efficace, | 7,19,31,142,451,140,2337,177 | *service, efficient* | |
| | resto, petit, | 4,7,30,152,404,187,1739,98 | *small, restaurant* | |
| | cuisine, traditionnel, | 5,12,28,161,427,169,1814,108 | *traditional, cooking* | |
| 3 | poisson, frais, | 2,5,8,44,155,82,775,71 | *fresh, fish* | *+ve* |
| | ambiance, familial, | 2,1,5,43,155,88,719,48 | *family, atmosphere* | |
| | cuisine, fin | 3,4,10,58,309,152,1336,61 | *delicate, cooking* | |
| | oeil, fermé, | 1,3,1,13,119,170,1150,54 | *eyes*, *shut* | |
| | choix, grand, | 1,3,15,49,233,70,924,43 | *large, choice* | |
| | plat, original, | 3,6,19,60,198,104,1067,85 | *original, dish* | |
| | choix, large | 3,10,9,59,194,66,865,50 | *large, choice* | |
| | salle, petit, | 11,18,22,93,191,59,1129,180 | *small, room* | |
| | service, discret, | 2,6,19,51,191,77,1143,74 | *discreet, service* | |
| | carte, varié | 1,13,18,82,288,123,1273,65 | *varied, menu* | |
| 4 | ambiance, froid, | 8,21,30,19,20,0,151,76 | *cold,atmosphere* | *-ve* |
| | note, salé, | 14,26,13,8,14,2,130,119 | *padded, bill* | |
| | plat, froid, | 20,40,10,7,5,1,97,104 | *cold, dish* | |
| | service, froid, | 11,27,10,20,14,1,15,6,92 | *cold, service* | |
| | restaurant, gastronomique | 10,28,20,21,94,75,467,86 | *gastronomic, restaurant* | |
| | temps, long, | 7,32,21,20,18,4,175,106 | *long, time* | |
| | quantité, petit, | 12,14,19,25,6,2,163,111 | *small quantity* | |
| | service, limite | 6,42,18,10,5,0,91,74 | *borderline,service* | |
| | salle, bruyant, | 13,28,22,44,53,7,370,161 | *noisy, room* | |
| | addition, salé, | 19,40,23,15,7,0,190,145 | *padded, bill* | |

| CLUSTER | NOUN-ADJ RELATIONS | FEATURES (THE 8 FEATURES IDENTIFIED IN TABLE 2 ABOVE) | LOOSE TRANSLATION | POLA -RITY |
|---|---|---|---|---|
| | plat, chaud | 10,11,13,7,30,12,208,78 | *hot, dish* | |
| | serveur, jeune, | 10,7,8,15,22,15,273,91 | *young, waiter* | |
| | cuisine, gras, | 10,18,14,12,7,3,82,68 | *heavy, cooking* | |
| | portion, petit, | 19,24,13,10,6,6,125,112 | *small, portion* | |
| | prix, excessif | 15,66,40,32,21,2,284,173 | *excessive*, *price* | |

As can be seen, cluster 1, with five elements, is clearly a cluster of expressions with negative polarity and can be labeled by the reviewer as such.

Cluster 2, with 9 elements, is clearly a cluster of expressions with positive polarity, and labeled as such. Cluster 3, with 10 elements, is clearly a cluster of expressions with positive polarity, and Cluster 4, with 15 elements, is clearly a cluster of expressions with negative polarity.

The first fourteen clusters were manually evaluated and validated by counting the number of elements of the cluster that have the polarity of the whole cluster. The results are shown in TABLE 4.

**TABLE 4**

| CLUSTER NO. | NO. OF ELEMENTS | POLARITY | ACCURACY |
|---|---|---|---|
| 1 | 5 | Neg | 100% |
| 2 | 9 | Pos | 100% |
| 3 | 10 | Pos | 90% |
| 4 | 15 | Neg | 80% |
| 5 | 27 | Pos | 88% |
| 6 | 30 | Pos | 90% |
| 7 | 31 | Neg | 60% |
| 8 | 43 | Neg | 58% |
| 9 | 50 | Neg | 56% |
| 10 | 51 | Pos | 57% |
| 11 | 55 | Pos | 62% |
| 12 | 60 | Neg | 28% |
| 13 | 70 | Pos | 38% |
| 14 | 71 | Neg | 40% |

Evaluating was stopped at this stage since the accuracy for the remaining clusters diminishes, as well as the number of occurrences of the elements of the clusters within the corpus. The accuracy is determined by manual evaluation, a 100% accuracy indicates that all the patterns in the cluster are of the same polarity. As will be appreciated, some patterns are neutral, and the exemplary method does not provide for a neutral category, only a binary category decision. Based on this validation, a list of 151 positive patterns and 118 negative patterns is manually identified, i.e. a total of 269 opinion-related frequent patterns 58. This included manually selecting the positive and patterns from the 14 clusters.

### Integration of the Results within the Opinion Detection System

At the end of the previous step (S118), clusters of patterns have been collected and validated and associated with a positive or negative polarity. These results are then used to supplement a rule-based opinion extractor by automatically converting these patterns into rules (in a dedicated XIP format). There are several options within XIP for the format of these rules; for example a polarity is associated with the adjective of the pattern according to the syntactic context. For example a pattern such as "service,lent", which belongs to a negative cluster (cluster 1), is converted into the following rule:
|#1[lemma:"lent", **negative=+**|
If (ATTRIB(#2[lemma: "service"],# 1) | NMOD(#2[lemma: "service"],#1))~

The indicates the conjunction OR. This rule assigns the semantic feature "negative" to the adjective "lent"(#1), if and only if this adjective is in attribute or modifier relation with the noun "service"(#2). Then, the opinion detection component 124 that is applied subsequently can make use of this information to extract opinion relations.

For example, using these rules, if the input sentence is: "Le service est lent.", the parser will extract a negative opinion relation: OPINION[negative](service,lent), while if the input sentence is: "La cuisson doit etre lente." the parser does not extract any opinion relation, because the association "cuisson, lente" is relatively neutral and is not an instance of any of the contextual rules implemented by the system.

It is straightforward to convert the clustered validated patterns automatically into this kind of contextual rule that then can be applied on top of the parser, and integrated into the opinion detection component 124. This resulted in a parsing layer 60 containing 269 such rules.

### Evaluation

In order to evaluate the impact of the learned opinion-related rules 60 on the performance of the opinion detection system 62, the application of the system to a review classification task is compared with and without the rules 60. The corpus collected can be considered as annotated in terms of polarity classification, since the user gives an explicit mark. From these, the marks 0,1,2 = negative and 3,4,5 = positive. The relations of opinions extracted by the exemplary system are used to train a SVM binary classifier 126 in order to classify the reviews as positive or negative (SVMLight, see T. Joachims, "Making large-Scale SVM Learning Practical," Advances in Kernel Methods - Support Vector Learning, B. Schölkopf and C. Burges and A. Smola, Eds., MIT Press (1999)).

For this experiment, 25,000 reviews were extracted randomly from the initial corpus to train the SVM classifier, 3500 reviews were extracted randomly for validation and 3500 reviews were extracted randomly for testing. A constraint was to have a 50% partition of positive and negative reviews in the training, validation and test corpora. The SVM features are the relations of opinion on a given target concept and their values are the frequencies of these relations within a given review, e.g. OPINION-POSITIVE-on-SERVICE:2, OPINION-NEGATIVE-on-CUISINE:1 , etc.

For example, for the following review:

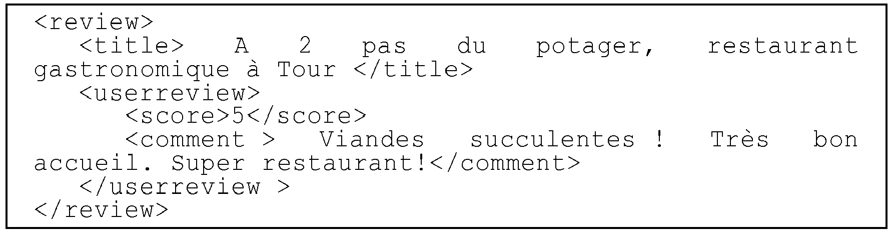

The opinion detection system extracts the 3 following opinion relations:
Opinion[positive](succulent,viande)
Opinion[positive](bon,accueil)
Opinion[positive](super,restaurant)

Which are converted in to 3 features of the SVM (FEATURE: Number-of-Occurrences):
Opinion-pos-on-viande:1
Opinion-pos-on-accueil:1
Opinion-pos-on-restaurant:1 1

Using this information, the classifier 126 classifies reviews according to an overall opinion.

The same test with the same data was run, respectively with and without the integration of the exemplary learned resource of opinion-related patterns. TABLE 5 shows the results obtained on the test set.

**TABLE 5**

| Test set | Positive reviews | Negative reviews | Total reviews |
|---|---|---|---|
| Number | 1750 | 1750 | 3500 |
| Accuracy of the classification : system without the learned opinion-related rules (∼baseline) | 81.6% | 78.6% | 80.1% |
| Accuracy of the classification : system including the learned rules | 85.7% | 83.1% | 84.4% |

As can be seen from Table 5, the opinion-related patterns, once encoded in the system, improve the classification task by about 3.3 %, which is a useful improvement.

Thus, the clustering of syntactic patterns linking pairs of words which have been extracted by a robust parser, using a combination of structural information associated with online reviews (essentially the different marks given by the reviews' authors) and co-occurring information about opinions extracted by an existing opinion system, provides contextual rules that are useful in detecting opinion. The resulting clusters are used to enrich the opinion detection system and encode contextual and/or domain dependent opinionated pairs of words.

As will be appreciated, extraction of polar information is invaluable for any opinion mining application. The contextual rules find application in a wide range of computer implemented opinion mining applications.

## Claims

1. A method for extracting opinion-related patterns, comprising:
receiving a corpus of reviews, each of the reviews in the corpus including an explicit rating of a topic;
partitioning at least a portion of the reviews among a predefined plurality of classes, based on the explicit ranking;
identifying syntactic relations in a text portion of each of the reviews in the portion of the reviews, each of the identified syntactic relations including a first term comprising an adjective and a second term comprising a noun, the adjective serving as a modifier or attribute of the respective noun;
generating a set of patterns, each of the patterns having at least one of the identified syntactic relations as an instance;
with a processor, clustering the patterns into a set of clusters based on a set of features, at least one of the features in the set of features being based on occurrences, in the predefined classes, of the instances of the patterns;
selecting a subset of the clusters and assigning a polarity to patterns in the respective clusters in the subset; and
outputting information based on the polarity assigned to the patterns in the respective clusters of the selected subset.

2. The method of claim 1, wherein the plurality of classes comprises at least three classes.

3. The method of claim 1 or claim 2, wherein each of the generated patterns specifies a lemma form of a specific noun and a specific adjective.

4. The method of any of the preceding claims, wherein the set of features comprises, for each of the classes, a respective feature which is based on a number of instances of the pattern which are identified in the text portions of the reviews in that class.

5. The method of any of the preceding claims, wherein the method further comprises, for reviews in the portion of reviews, identifying, in the text portion, instances of terms in a polar vocabulary, and wherein at least one of the features in the set of features is based on co-occurrence within a review of an instance of a pattern in the set of patterns and an identified instance of a term in a polar vocabulary, and wherein preferably for each pattern, the set of features includes a first feature value based on a number of co-occurrences of an instance of the pattern with an instance of a positive polar term and a second feature value based on a number of co-occurrences of an instance of the pattern with an instance of a negative polar term.

6. The method of any of the preceding claims, wherein for each pattern, at least four feature values are assigned.

7. The method of any of the preceding claims, wherein at least 10 clusters are generated.

8. The method of any of the preceding claims, wherein the assigning a polarity comprises at least one of:
receiving a reviewer's assignment of a polarity to each of a plurality of the clusters;
assigning a polarity from a predefined plurality of polarities; and
assigning a positive polarity to at least a first of the plurality of the clusters and assigning a negative polarity to at least a second of the plurality of the clusters.

9. The method of any of the preceding claims, further comprising generating a contextual rule for each of the patterns which have been assigned polarity, the rule specifying that an instance of the pattern in text is to be assigned the polarity which has been assigned to the pattern, and optionally, inputting the contextual rules to an opinion detection system and applying the contextual rules during extraction of opinions from a text sample.

10. A computer program product comprising a non-transitory computer-readable medium which stores instructions, which when implemented by a computer, perform the method of any of the preceding claims.

11. A system comprising memory which stores instructions for implementing the method of any of the preceding claims and a processor in communication with the memory which implements the instructions.

12. An opinion detection system comprising:
memory which stores:
a set of contextual rules for identifying instances of the patterns generated by the method of claim 1 in a text sample and assigning a polarity to the instances based on the polarity assigned to the respective pattern, and
an opinion detection component which applies the rules to a text sample; and
a processor which implements the opinion detection component.

13. A system for generating contextual rules for opinion detection comprising:
a review classifier for partitioning reviews among a predefined plurality of classes, based on an explicit ranking of a topic associated with each of the reviews;
a parser for identifying syntactic relations in a text portion of each of the reviews in the portion of the reviews, each of the identified syntactic relations including a first term comprising an adjective and a second term comprising a noun, the adjective serving as a modifier or attribute of the respective noun;
a pattern extractor for generating a set of patterns, each of the generated patterns having at least one of the identified syntactic relations as an instance;
a clustering component for clustering the patterns into a set of clusters based on a set of features, at least one of the features in the set of features being based on occurrences, in the predefined classes, of the instances of the patterns;
a contextual rule generator for generating contextual rules for the patterns in a plurality of the clusters, to which a polarity has been assigned; and
a processor for implementing the review classifier, parser, pattern extractor, clustering component, and contextual rule generator.

14. The system of claim 13, further comprising a feature extractor, implemented by the processor, which extracts a value for each feature for each of the generated patterns.

15. A system according to claim 13 or claim 14, adapted to carry out a method according to any of claims 1 to 9.
